# EUROPEAN PATENT APPLICATION

(11) **EP 0 936 370 A1**
(43) Date of publication of application: **18.08.1999**
(21) Application number: 98300337.7
(22) Date of filing: 19.01.1998
(51) Int. Cl.: F16D 31/02

(54) **Rotational speed difference sensitive type joint assembly**

(71) Applicant: Zexel Corporation, Shibuya-ku, Tokyo 150-0002 (JP)
(72) Inventor: Ohkubo, Takashi, c/o Zexel Corporation, Osato-gun, Saitama-ken (JP); Ishikawa, Isao, c/o Zexel Corporation, Osato-gun, Saitama-ken (JP); Nakajima, Shinichiro, c/o Zexel Corporation, Osato-gun, Saitama-ken (JP)
(74) Representative: Votier, Sidney David

(57) **Abstract**

A bottom surface of a receiving cavity 1b of a housing 1 and a cam plate 3 unrotatably connected to an end portion of the receiving cavity 1b on its opening portion side are formed respectively with cam faces 1c, 3a annularly extending about an axis L of rotation. A disc portion 2b of the rotor 2 opposing the cam faces 1c, 3a are formed therein with a plurality of cylinder bores 2c in parallel relation with the axis L of rotation. Plungers 7, 7 are slidably inserted each into each of both end portions of each cylinder bore 2c. Each cylinder bore 2c is provided therein with biasing means 8 for biasing one of the plungers 7, 7 against the cam face 1c and the other plunger 7 against the cam face 3a.

## Description

### BACKGROUND OF THE INVENTION

This invention relates to a rotational speed difference sensitive type joint assembly disposed between two members which are capable of rotation relative to each other, and for generating a resistance of the size corresponding to the difference in speed between the two members.

The conventional joints of this type include a housing and a rotor. The rotor is formed therein with a plurality of cylinder bores extending in parallel with an axis of rotation thereof. A plunger is slidably inserted into one end portion of each cylinder bore. On the other hand, the housing is formed with a cam, face against which the plunger is biased by a compression spring (resilient member). Accordingly, when the housing and the rotor are rotated relative to each other, the plunger is moved reciprocally. When the plunger is moved reciprocally, working oil flows out of the cylinder bore (when the plunger is moved forwardly) and flows into the cylinder bore (when the plunger is moved backwardly). When the working oil in the cylinder bore flows out, it passes through an orifice. This orifice generates a resistance of the size corresponding to the difference in speed between the housing and the rotor when the working oil passes through the orifice. Then, the torque corresponding to the flowing resistance is transmitted to the rotor (or the housing) which is rotating at a low speed from the housing (or the rotor) which is rotating at a high speed (see Japanese Patent Examined (Kokoku) Publication No. 103902/95 and USP4957473).

It is demanded for such a rotational speed difference sensitive type joint assembly to increase the resistance with respect to the difference in speed between the housing and the rotor without a need of increasing the size of the joint assembly as a whole. As one which can satisfy such demand, there is a joint assembly in which a plurality of cylinder bores are formed in one and the other ends of the rotor (see Japanese Patent Unexamined (Kokai) Publication No. 159423/90). According to such a rotational speed difference sensitive type joint assembly, since the number of the cylinder bores can be increased twice compared with a joint assembly in which cylinder bores are formed only in one end of the rotor, the resistance can be increased with respect to the rotational speed without a need of greatly increasing the overall size.

However, in the above conventional rotational speed difference sensitive type joint assembly, since the cylinder bores are formed in one and the other ends of the rotor independently, the cylinder bores on one and the other ends must be machined individually and therefore, much time and labor are required. Further, since there is a provision of a partition wall between the cylinder bores on one end side and the cylinder bores on the other end side, it is difficult to greatly reduce the overall size.

### SUMMARY OF THE INVENTION

The feature of the present invention resides in a rotational speed difference sensitive type joint assembly comprising a housing having one pair of cam faces annularly extending about an axis of rotation thereof; a rotor connected to the housing for relative rotation about the axis of rotation and including a plurality of cylinder bores formed in parallel relation with the axis of rotation; a plurality of plungers slidably inserted each into each of the cylinder bores; and biasing means for biasing the plungers against the cam face; characterized in that the housing (1) has one pair of the cam faces (1c, 3a) opposing each other in a direction of the axis (L) of rotation, the rotor (2) includes the plurality of cylinder bores (2c) formed all the way through the interior of the rotor (2), both end portions of the cylinder bores (2c) opposing the one pair of cam faces (1c, 3a), each of the cylinder bores (2c) is provided at opposite end portions thereof with one pair of the plungers (7, 7), the biasing means (8; 8A, 8B, 8C) is disposed between the one pair of plungers (7, 7) in such a manner as to biase the one pair of plungers (7, 7) against the one pair of cam face (1c, 3a), and the one pair of cam faces (1c, 3a) and the biasing means (8; 8A, 8B, 8C) cause the one pair of plungers (7, 7) to be reciprocally moved towards and away from each other.

### BRIEF DESCRIPTION OF THE DRAWINGS

Figs. 1(A)-1(B) are views showing one embodiment of a rotational speed difference sensitive type joint assembly according to the present invention, Fig. 1(A) is a vertical sectional view thereof, and Fig. 1(B) is a sectional view taken on line X-X of Fig. 1(A);
Fig. 2 is a sectional view taken on line Y-Y of Fig. 1(A);
Fig. 3 is a sectional view taken on line Z-Z of Fig. 1(B);
Fig. 4 is a perspective view showing a support member employed in the embodiment of Figs. 1(A)-1(B);
Fig. 5 is an exploded perspective view of the support member;
Fig. 6 is a schematic view showing a general construction of one embodiment of the wheel-related portion in which the rotational speed difference sensitive type joint assembly of Figs. 1(A)-1(B) is employed;
Fig. 7 is a schematic view showing a general construction of another embodiment of the wheel-related portion in which the rotational speed difference sensitive type joint assembly of Figs. 1(A)-1(B) is employed;
Fig. 8 is a vertical sectional view showing another embodiment of a rotational speed difference sensitive type joint assembly according to the present invention;
Fig. 9 is a sectional view taken on line X-X of Fig. 8;
Fig. 10 is a sectional view taken on line Y-Y of Fig. 9; and
Fig. 11 is a vertical sectional view showing a further embodiment of a rotational speed difference sensitive type joint assembly according to the present invention.

### DETAILED DESCRIPTION OF THE INVENTION

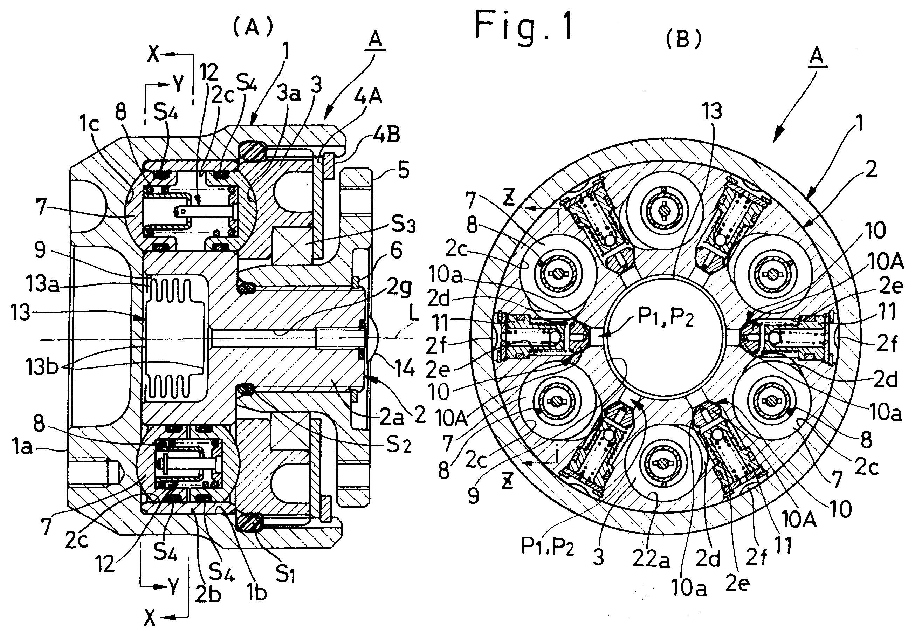

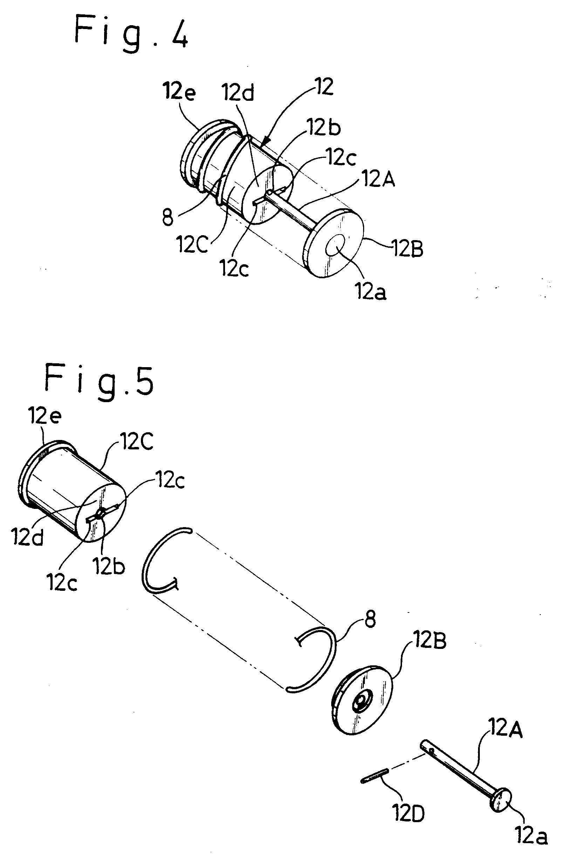

One embodiment of the present invention will be described hereinafter with reference to Figs. 1(A)-1(B) through 11 of the accompanying drawings.

First, one embodiment of the present invention shown in Figs. 1(A)-1(B) through 7 is described. A rotational speed difference sensitive type joint assembly (hereinafter sometimes simply referred to as the "joint assembly") A is disposed, for example, between the left and right wheels of an automobile and suited to be used as a differential limiter. The joint assembly A comprises a housing 1 and a rotor 2 which are capable of rotation relative to each other about an axis L.

An attachment surface 1a is formed on one end face of the housing 1. One of the two rotational members (not shown) to be connected to the joint assembly A is fixedly connected to the attachment surface 1a. A receiving cavity 1b is formed in the other end face of the housing 1. A cam plate 3 is spline connected to an opening end portion of the receiving cavity 1b such that the cam plate 3 is unable to rotate but movable in the direction of the axis L. The cam plate 3 is prevented from coming off the receiving cavity 1b by a ring-like support plate 4 and a stopper ring 4B. Cam faces 1c, 3a annularly extending about the axis L are formed on the cam plate 3 and on a bottom surface of the receiving cavity 1b opposing the cam plate 3. The cam faces 1c, 3a are the same in size and in configuration except that phases of them are opposite to each other.

Reference symbol S₁ denotes a seal member comprising of an O-ring or the like, for sealing the space between a housing 1 and a cam plate 3.

The rotor 2 comprises a shaft portion 2a piercing through the cam plate 3, and a disc portion 2b integral with an inner end portion of the shaft portion 2a. A flange member 5 is unrotatably attached to the shaft portion 2a through spline connection and prevented from coming off by a stopper ring 6. Of the two rotatable members to be connected to the joint assembly A, the other rotatable member is fixedly connected to the flange member 5. Reference symbol S₂ denotes a seal member comprising an O-ring, or the like, for sealing the space between the shaft portion 2a and the flange member 5, and S₃ denotes a seal member for sealing the space between the cam plate 3 and the flange member 5.

A plurality of cylinder bores (six cylinder bores in this embodiment) are formed all the way through the disc portion 2b of the rotor 2. The respective cylinder bores 2c are arranged in parallel relation with the axis L and equally spacedly in the circumferential direction. Plungers 7, 7 are slidably fitted respectively in opening portions of opposite ends of each cylinder bore 2c. The plungers 7, 7 are biased against the cam faces 1c, 3a by a coiled spring (resilient member) 8 disposed therebetween. Therefore, when the housing 1 and the rotor 2 are rotated relative to each other, the plungers 7, 7 are caused to reciprocally move towards and away from each other. When the plungers 7, 7 are moved towards each other, working oil is pushed out of the cylinder bore 2c. When the plungers 7, 7 are moved away from each other, working oil flows into the cylinder bore 2c.

Reference symbol S₄ denotes a seal member comprising an O-ring, or the like, for sealing the space between the plunger 7 and the cylinder bore 2c.

A hole 2h is formed in a central portion of the inner end face of the rotor 2. A working oil receiving chamber 9 is defined by the hole 2h and a bottom surface of the receiving cavity 1b of the housing 1 for closing the opening portion of the hole 2h. This working oil receiving chamber 9 is communicated with each cylinder bore 2c through an attachment hole 2e extending from an inner peripheral surface of the hole 2h to an outer peripheral surface of the disc portion 2b and an arcuate communication groove 2d formed in an inner peripheral surface of a central portion of each cylinder bore 2c. Accordingly, when the plungers 7, 7 are moved towards and away from each other, working oil flows between the cylinder bores 2 and the working oil receiving chamber 9.

The attachment hole 2e is provided with a check valve 10. This check valve 10 includes a valve seat 10A formed on the inner peripheral surface of the attachment hole 2e, and a valve element 10B for sitting on the valve seat 10A for closing the attachment hole 2e when the working oil flows from the cylinder bore 2c to the working oil receiving chamber 9, and lifting from the valve seat 10A for opening the attachment hole 2e when the working oil flows from the working oil receiving chamber 9 to the cylinder bore 2c. The valve element 10B is formed with an orifice 10a. This orifice 10a communicates a portion of the attachment hole 2e on the cylinder bore 2c side with a portion of the attachment hole 2e on the working oil receiving chamber 9 side when the valve element 10B sits on the valve seat 10A.

Accordingly, when the plungers 7, 7 are moved towards each other to cause the working oil to flow from the cylinder bore 2c to the working oil receiving chamber 9, the working oil necessarily passes through the orifice 10a and the working oil is subjected to the flowing resistance when it passes through the orifice 10a. Because the working oil in the cylinder bore 2c is subjected to flowing resistance when it passes through the orifice 10a, the working oil in the cylinder bore 2c is pressurized to urge the plungers 7, 7 against the cam faces 1c, 3a and as a result, frictional resistance is generated therebetween. Then, the flowing resistance caused by the orifice 10a and the frictional resistance between the plungers 7, 7 and the cam faces 1c, 3a limit the relative rotation between the housing 1 and the rotor 2 and cause the rotary torque to be transmitted from the housing 1 (or rotor 2) which is rotating at a high speed towards the rotor 2 (or housing 1) which is rotating at a low speed.

On the other hand, when the plungers 7, 7 are moved away from each other, the check valve 10 is opened. Therefore, when the working oil in the working oil receiving chamber 9 flows to the cylinder bore 2c through the attachment hole 2e and the communication groove 2d, it is hardly susceptible to resistance.

As apparent from the foregoing, the attachment hole 2e and the communication groove 2d are also served as a supply path P₁ and P₂, respectively.

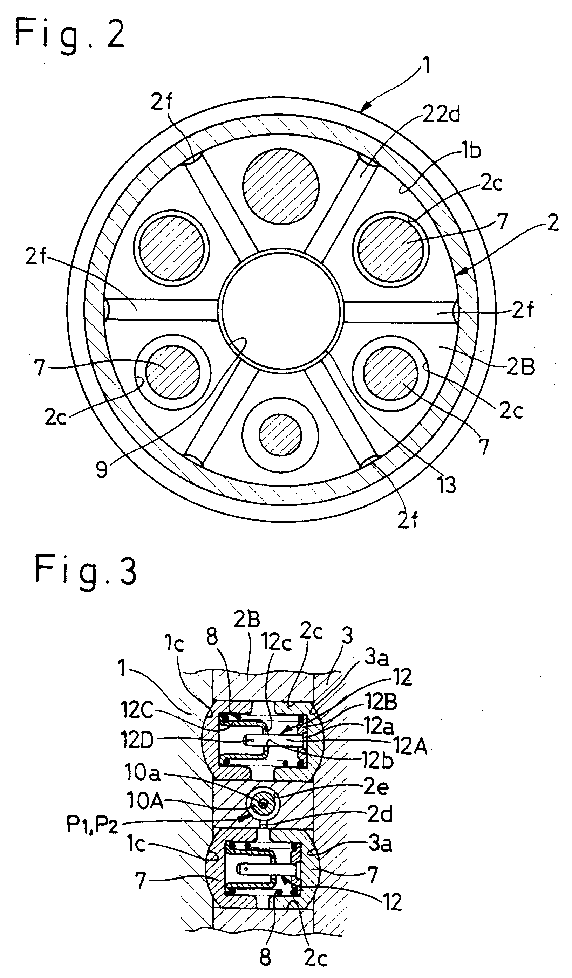

The attachment hole 2e is provided with a relief valve 11. When the working oil in the cylinder bore 2c pressurized by the plungers 7, 7 is increased in pressure to a prescribed level or more, this relief valve 11 is opened to permit the working oil in the cylinder bore 2c to return to the working oil receiving chamber through relief groove 2f (see Fig. 1(B) and 2) formed in the outer peripheral surface and the end face of the disc portion 2b. By this, the working oil is prevented from being increased in pressure beyond the prescribed pressure level

If the coiled spring 8, which is expanded and contracted in accordance with the reciprocal movements of the plungers 7, 7, should be greatly fluctuated in biasing force between the first position where the coiled spring 8 is contracted the most and the second position where the coiled spring 8 is expanded the most, the following problems would be resulted. That is, if the coiled spring 8 is overly increased in biasing force when it is contracted the most, the urging forces of the plungers 7, 7 against the cam faces 1c, 3a are overly increased with the result that the cam faces 1c, 3a are worn quickly. In contrast, if the coiled spring 8 is overly decreased in biasing force when it is expanded the most, the force for drawing the working oil into the cylinder bore 2c by the coiled spring 8 is overly decreased, thus resulting in shortage of the working oil drawn into the cylinder bore 2c. For this reason, it is preferred that the coiled spring 8 to be employed is least fluctuated in biasing force between the first position where the coiled spring 8 is expanded the most and the second position where it is contracted the most.

As one attempt to suppress the fluctuation of the biasing force of the coiled spring 8, it can be contemplated that a long coiled spring in a natural condition is employed and this coiled spring is built in the cylinder bore 2c in its contracted state. However, it gives rise to the problems that the long coiled spring 8 is hard to handle and the work for building the long coiled spring in the cylinder bore 2c is difficult.

In the joint assembly A of this embodiment, a support mechanism 12 is employed in order to facilitate the work for building the long coiled spring 8 in the cylinder bore 2c. As shown in Figs. 3, 4 and 5, the support mechanism 12 comprises a support shaft 12A, a flange 12B arranged on one end portion of the support shaft 12A, and a support sleeve 12C arranged on the other end portion of the support shaft 12A. The flange 12B has approximately the same outside diameter as the coiled spring 8 and prevented from coming off the support shaft 12 by a head portion 12a of the support shaft 12A. The support sleeve 12C has approximately the same outside diameter as the inside diameter of the coiled spring 8, and is formed on one end portion thereof with a bottom portion 12d. This bottom portion 12d is formed in a central portion thereof with an insertion hole 12b into which the support shaft 12A is longitudinally slidably inserted. The support shaft 12A is prevented from coming off the insertion hole 12b by a stopper pin 12D. The stopper pin 12D can be inserted into a slit 12c formed in an inner peripheral surface of the insertion hole 12b. By turning the support sleeve 12C and the support shaft 12A , for example, by 90 degrees after the stopper pin 12D is inserted, the stopper pin 12D is prevented from coming off the slit 12c.

The coiled spring 8 is arranged in its compressed state between the flange 12B and an annular projection 12e formed on an outer peripheral surface of the other end portion (that end portion opposite the bottom 12d) of the support sleeve 12C. In this case, because the flange 12B and the support sleeve 12C are in abutment with the head portion 12a of the support shaft 12A and the stopper pin 12D respectively, the coiled spring 8 is maintained in its compressed state. In this way, since the use of the support mechanism 12 makes it possible to support the coiled spring 8 in its compressed state, even a long coiled spring 8, when employed, can easily be handled and easily built in the cylinder bore 2c. Particularly, in the case of this embodiment, since almost a half of the coiled spring 8 is engaged with the outer periphery of the support sleeve 12C, the coiled spring 8 in its compressed state can be handled much easier.

As apparent from Fig. 1(A), even in the condition that the plungers 7, 7 are moved away from each other the most, the support sleeve 12C is never abutted with the stopper pin 12D. Accordingly, the coiled spring 8 can normally bias the plungers 7, 7 outwardly. When the plungers 7, 7 are moved towards each other, the support sleeve 12C is moved towards the flange 12B against the effect of the coiled spring 8.

As shown in Fig. 1, an expanding- and- contracting member 13 is received in the working oil receiving chamber 9. This expanding- and-contracting member 13 comprises an expansible and contractible accordion-like bellows portion 13a made of metal or resin, and a bottom portion made of metal or resin for closing opening portions at opposite ends of the bellows portion 13a. Gas, such as air, having a prescribed pressure is confined within the member 13. Owing to this arrangement, the expanding- and- contracting member 13 can be expanded and contracted in accordance with the fluctuation of the pressure in the working oil receiving chamber 9. For example, when the working oil is expanded, the expanding- and- contracting member 13 is contracted to prevent the pressure in the working oil receiving chamber 9 from becoming high, and when the working oil is contracted, the member 13 is expanded to prevent the pressure in the working oil receiving chamber 9 from become negative, thereby maintaining the pressure in the working oil receiving chamber 9 generally at a constant level.

The working oil receiving chamber 9 is open to the exterior through an inlet port 2g formed in the rotor 2. A stopper screw 14 is threadingly engaged in an outer opening portion of the inlet port 2g in order to close the inlet port 2g. Accordingly, by removing the stopper screw 14, the working oil can be poured into the working oil receiving chamber 9 through the inlet port 2b. By tightening the stopper screw 14 re-engaged after pouring, the working oil can be prevented from leaking outside through the inlet port 2g.

In the joint assembly A thus constructed, since the cylinder bore 2c is in the form of a through-hole and the plungers 7, 7 are arranged on the both end portions thereof, it is not necessary to form the cylinder bore for each plunger 7. Therefore, the time and labor for working can be reduced to that extent. Thus, the manufacturing cost can be reduced. Moreover, the partition wall portion, which is conventionally required to provide between the adjacent cylinder bores, is no more required. Therefore, the length (thickness) of the disc portion 2b can be reduced to that extent (namely, the partition wall is no more required). This makes it possible to design the joint assembly A small in size.

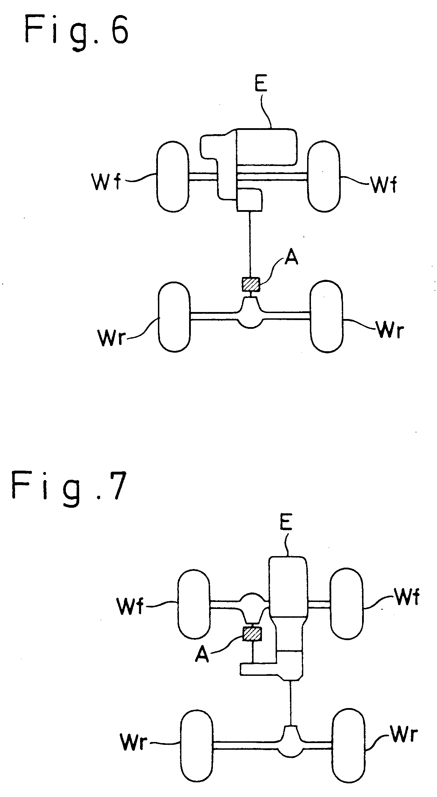

Figs. 6 and 7 show examples in which the joint assembly A having the above construction is applied to a four-wheeled vehicle. In the four-wheeled vehicle of Fig. 6, front wheels Wf, Wf are connected directly to an engine E (not through the joint assembly A), and the rear wheels Wr, Wr are connected to the engine E through the joint assembly A. Accordingly, when the front wheel Wf and the rear wheel Wr are rotating at an equal speed, only the front wheel Wf is driven for rotation, and the rear wheel Wr is merely rotated. However, when the front wheel Wf is rotated at a high speed, the driving force of the engine E is transmitted to the rear wheel Wr through the joint assembly A.

In the four-wheeled vehicle of Fig. 7, the rear wheel Wr is connected directly to the engine E , unlike the four-wheeled vehicle of Fig. 6 in which front wheel Wf is connected directly to the engine E, and the front wheel Wf is connected to the engine E through the joint assembly A. In this case, only when the rear wheel Wr is rotated at a higher speed than the front wheel Wf, the driving force of the engine E is transmitted to the front wheel Wf through the joint assembly A.

Other embodiments of the present invention will now be described. In the embodiments to be described hereinafter, only those portions having different constructions from those of the above embodiment are described. Same parts are denoted by same reference numerals and description there of is omitted.

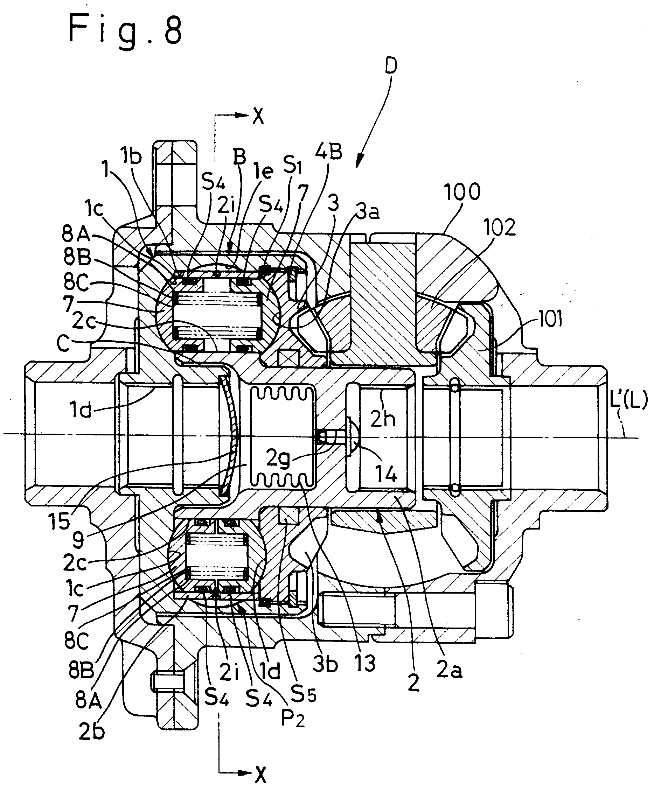

A joint assembly B shown in Figs. 8 through 10 is suited to be used as a differential limiter between the front wheels and the rear wheels or between the right wheel and the left wheel of an automobile, for example. The joint assembly B is built in a differential gear unit D.

The differential gear unit D includes a differential case 100 driven for rotation about an axis L' thereof. A side gear 101 rotatable about the axis L' and at least one pinion gear 102 meshed with the side gear 101 are rotatably provided within the differential case 100 at one end thereof.

The joint assembly B is arranged within the differential case 100 at the other end thereof such that an axis L of the joint assembly B is in alignment with the axis L'. A side gear portion 3b is formed on an end face (the end face on the opposite side of the cam face 3a) of a cam plate 3 of the joint assembly B. This side gear portion 3b has the same gear specifications as the side gear 101 and is meshed with the pinion gear 102. Accordingly, the housing 1 of the joint assembly B acts as a side gear forming one pair together with the side gear 101. In place of the attachment surface 1a and the flange member 5 of the above joint assembly A, spline holes 1d, 2h extending on the axis L are formed. One of the left and right axles, for example, is unrotatably connected to the spline hole 1d of the housing 1, and the other axle is unrotatably connected to the spline hole 2h of the rotor 2. The other axle connected to the rotor 2 is also unrotatably connected to the side gear 101 through spline connection or the like. Accordingly, the rotor 2 acts in unison with the side gear 101.

In the joint assembly B, no orifice is formed in the valve element 10A of a check valve 10 provided in the attachment hole 2e, but an orifice 2i communicating with the cylinder bore 2c is formed in the outer peripheral surface of the disc portion 2b of the rotor 2. The working oil in the cylinder bore 2c passes through the orifice 2i, and passes through an annular groove 1e formed in the inner peripheral surface of the receiving cavity 1b of the housing 1, the relief groove 2f and an annular gap C formed between the housing 1 and the rotor 2, and finally flows into the working oil receiving chamber 9. On the other hand, the working oil in the working oil reserving chamber 9 flows into the cylinder bore 2c through the gap C, the relief groove 2f, and the attachment hole 2e. Therefore, the supply path P₁ is defined by the gap C, the relief groove 2f, and the attachment hole 2e, while the return path P₂ is defined by the orifice 2i, the annular groove 1e, the relief groove 2f, and the gap C.

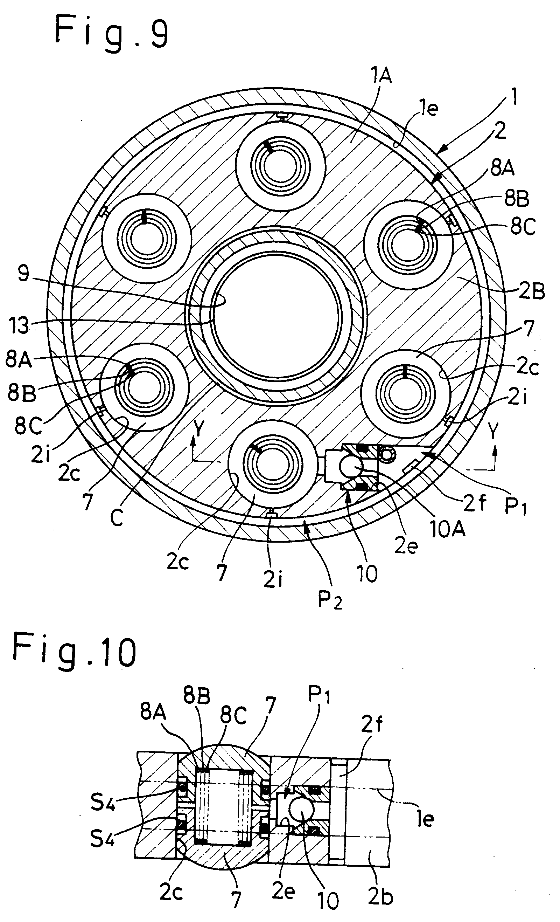

In this embodiment, only the check valve 10 is provided on the attachment hole 2e and the relief valve 11 of the joint assembly A is not provided thereon. However, the relief valve may, of course be provided on the attachment hole 2e. Although Fig. 9 shows one each of the attachment holes 2e and the check valves 10, they are provided in such a manner as to correspond to the respective cylinder bores 2c.

Also, instead of the coil spring 8, three coiled springs 8A, 8B and 8C are employed. Those three coiled springs 8A, 8B and 8C are designed to directly bias the plungers 7, 7 without any intermediate support member. Furthermore, a partition plate 15 for isolating the spline hole 1d and the working oil receiving chamber 9 from each other is fixed to an inner end portion of the spline hole 1d. Reference symbol S5 denotes a seal member for sealing the space between the rotor 2 and the cam plate 3.

In the differential gear unit D thus constructed, the differential gear unit D as a whole is rotated in unison when the two axles are rotating at an equal speed. On the other hand, when the two axles are rotating at different speeds, the housing 1 and the rotor 2 of the joint assembly B are rotated relative to each other at the same speed difference as the speed difference between the two axles. As a consequence, a torque is transmitted from the axle which is rotating at a high speed to the axle which is rotating at a low speed, and the differential rotation between the two axles is limited to that extent.

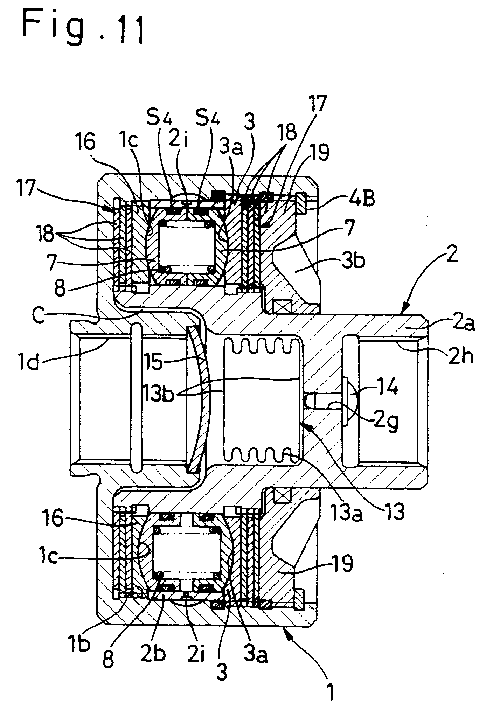

A joint assembly C of Fig. 11 is the same as the above joint assembly B in the respect that it is built in a differential gear unit (not shown). However, the joint assembly C employs a multi-disc frictional mechanism 17 in order to more effectively limit the differential rotation.

That is, in this joint assembly C, the cam face 1c is formed on a cam plate (cam member) 16 separately situated from the housing 1. The cam plate 16 is unrotatably engaged, through spline connection or the like, with the housing 1 for movement in the direction of the axis L. Between the cam plate 16 and the bottom surface of the receiving cavity 1b, a multi-disc frictional mechanism 17 is provided. This multi-disc frictional mechanism 17 includes a plurality of frictional plates 18 (three frictional plates 18 in this embodiment) arranged between the cam plate 16 and the bottom surface of the receiving cavity 1b. Of all the frictional plates 18, those frictional plates 18, which are arranged in positions of odd numbers from the cam plate 16 towards the bottom surface of the receiving cavity 1b, are unrotatably provided, through spline connection or the like, on the rotor 2 for movement in the direction of the axis L. On the other hand, the remaining frictional plates 18, which are arranged in positions of even numbers, are unrotatably provided, through spline connection or the like, on the housing 1 for movement in the direction of the axis L.

Since the cam plate 16 and the frictional plate 18 are capable of movement in the direction of the axis L, they are contacted each other when the plunger 7 is pressed by the cam face 1c. Moreover, since the frictional plates 18 are unrotatably connected alternately to the housing 1 and the rotor 2, frictional resistance is generated between the cam plate 16 and the frictional plate 18, between the adjacent frictional plates 18 and 18, and between the frictional plate 18 and the bottom surface of the receiving cavity 1b, when the housing 1 and the rotor 2 are rotated relative to each other. This frictional resistance limits the relative rotation between the housing 1 and the rotor 2.

In the above joint assembly B, the cam face 3a and the side gear portion 3b are formed on the cam plate 3. In contrast, in this joint assembly C, only the cam face 3a is formed on the cam plate (cam member) 3, and the side gear portion 3a is formed on a gear member 19. This gear member 19 is unrotatably provided, through spline connection or the like, on the housing 1 for movement in the direction of the axis L and prevented from coming off by a stop ring 4B. The multi-disc frictional mechanism 17 is also provided between the gear member 19 and the cam plate 3.

In the joint assembly C provided with the multi-disc frictional mechanism 17, the function as a differential limiter attributable to the flowing resistance of the orifice 2i is very small when the speed of relative rotation between the housing 1 and the rotor 2 is low. However, by designing the biasing forces of the coiled springs 8A, 8B and 8C comparatively large, the function as a differential limiter owing to a provision of the multi-disc frictional mechanism 17 can be made comparatively large even when the speed of relative rotation is low.

The present invention should not be limited to the above embodiment, and various changes and modifications can be made in accordance with necessity.

For example, in the above embodiments, the housing 1 is formed in a sleeve-like configuration and the rotor 2 is formed in a shaft-like configuration having the disc portion 2b. However, the present invention is, by no means, limited to those configurations. In this embodiment, the member formed with the cylinder bores 2c is referred to as "rotor", and the member provided with the cam surface 1c is referred to as "housing".

Instead of the multi-disc frictional mechanism 17 employed in the joint assembly C, a frictional mechanism having only a single frictional plate 18 may be employed. In that case, the single frictional plate 18 is unrotatably provided on the rotor 2 for movement in the direction of the axis L.

## Claims

1. A rotational speed difference sensitive type joint assembly comprising:
a housing having one pair of cam faces annularly extending about an axis of rotation thereof;
a rotor connected to said housing for relative rotation about said axis of rotation and including a plurality of cylinder bores formed in parallel relation with said axis of rotation;
a plurality of plungers slidably inserted each into each of said cylinder bores; and
biasing means for biasing said plungers against said cam face;
CHARACTERIZED IN THAT said housing (1) has one pair of said cam faces (1c, 3a) opposing each other in a direction of said axis (L) of rotation, said rotor (2) includes said plurality of cylinder bores (2c) formed all the way through the interior of said rotor (2), both end portions of said cylinder bores (2c) opposing said one pair of cam faces (1c, 3a), each of said cylinder bores (2c) is provided at opposite end portions thereof with one pair of said plungers (7, 7), said biasing means (8; 8A, 8B, 8C) is disposed between said one pair of plungers (7, 7) in such a manner as to biase said one pair of plungers (7, 7) against said one pair of cam face (1c, 3a), and said one pair of cam faces (1c, 3a) and said biasing means (8; 8A, 8B, 8C) cause said one pair of plungers (7, 7) to be reciprocally moved towards and away from each other.

2. A rotational speed difference sensitive type joint assembly according to claim 1, wherein a working oil receiving chamber (9) is formed within said housing (1), said rotor (2) , or between said housing (1) and said rotor (2), a supply path (P₁) and a return path (P₂) are provided between said working oil receiving chamber (9) and each of said plurality of cylinder bores (2c), a check valve (10) for permitting working oil to flow from said working oil receiving chamber (9) to said cylinder bore (2c) and preventing the working oil from flowing from said cylinder bore (2c) to said working oil receiving chamber (9) is provided on said supply path (P₁), and an orifice (10a; 2i) acting against the flow of the working oil is provided on said return path (P₂).

3. A rotational speed difference sensitive type joint assembly according to claim 1 or 2, wherein said resilient member (8) is supported by support means (12) disposed within said cylinder bore (2c), said support means (12) supporting said resilient member (8) such that said resilient means (8) in a compressed state having a prescribed length is prevented from expanding but permitted to contract.

4. A rotational speed difference sensitive type joint assembly according to claim 3, wherein said support means (12) includes a support shaft (12A) disposed within said cylinder bore (12c) in parallel relation therewith, one pair of retaining members (12B, 12C) engaged with said support shaft (12A) for movement in a longitudinal direction thereof and against which one and the other end portions of said biasing means (8) are brought into abutment respectively, and one pair of stoppers (12a, 12D) provided each on said one and the other end portions of said support shaft (12A) and adapted to prevent said one pair of retaining members (12B, 12C) from coming off.

5. A rotational speed difference sensitive type joint assembly according to one of claims 1 through 4, wherein one of said one pair of cam faces (1c, 3a) is formed on a cam member (16) unrotatably provided on said housing (1) for movement in a direction of said axis (L) of rotation, and a multi-disc frictional mechanism (17) is provided between opposing surfaces of said cam member (16) and said housing (1) in a direction of said axis (L) of rotation, said multi-disc frictional mechanism (17) comprising a plurality of frictional discs (18), at least one of said plurality of frictional discs (18) being unrotatably provided on said housing (1) and the remaining at least one of said frictional discs (18) being unrotatably provided on said rotor (2) and contacting each other.

6. A rotational speed difference sensitive type joint assembly according to claim 5, wherein said at least one frictional disc (18) unrotatably provided on said housing (1) and said remaining at least one frictional disc (18) unrotatably provided on said rotor (2) are alternately arranged in a direction of said axis (L) of rotation.
